# EUROPÄISCHE PATENTANMELDUNG

(11) **EP 0 636 405 A2**
(43) Veröffentlichungstag der Anmeldung: **01.02.1995**
(21) Anmeldenummer: 94110553.8
(22) Anmeldetag: 07.07.1994
(51) Int. Cl.: B01J 2/00, B65G 69/04, B01J 8/00

(54) **Vorrichtung und Verfahren zum Verändern der räumlichen Verteilung eines pulverförmigen Feststoffes**

(30) Priorität: 29.07.1993 CH 2285/93
(71) Anmelder: BÜHLER AG, CH-9240 Uzwil (CH)
(72) Erfinder: Reh, Lothar, Prof. Dr., CH-8126 Zumikon (CH); Meili, Reto Thomas, Dipl.-Ing. ETH, CH-8044 Zürich (CH); Goedicke, Frank, Dr., CH-9527 Niederhelfenschwil (CH); Ruf, Arthur, Dr., CH-8603 Schwerzenbach (CH)
(74) Vertreter: Révy von Belvárd, Peter

(57) **Zusammenfassung**

Bei einer Vorrichtung zum Verändern der räumlichen Verteilung einer Menge von pulverförmigem oder körnigem Feststoff zur Vergrösserung der einem Behandlungsmedium dargebotenen Angriffs-Oberfläche der Feststoffmenge, die über eine Dosiervorrichtung (101) in Strahlform (102) zugeführt wird, sind Mittel vorgesehen, den Feststoff mit wenigstens einem Fluid zu beaufschlagen. Dabei ist eine Geschwindigkeitskomponente (vₛ, vₑ) des Fluids senkrecht zur Strahlrichtung (7) des Feststoffs oder dieser entgegengerichtet. Die Konzentrationsverteilung des Feststoffs ist über einen der vergrösserten Angriffsoberfläche entsprechenden Bereich gleichmässig - wenigstens jeweils für Teilbereiche, die durch im wesentlichen senkrecht zur Strahlrichtung (7) liegende Ebenen (4a,4b,4c) definiert sind. Die Mittel umfassen eine im wesentlichen zylindrische Düse (103), die wenigstens einen fluid-führenden Kanal (104, 104a) aufweist. Über wenigstens eine dem freien Ende zugeordnete Öffnung (105, 105a) wird ein zur Feststoff-Strahlrichtung (7) im wesentlichen zentralsymmetrischer Fluidauslass bewirkt.

## Beschreibung

Die Erfindung betrifft eine Vorrichtung zum Verändern der räumlichen Verteilung einer Menge von pulverförmigem oder körnigem Feststoff nach dem Oberbegriff des Anspruches 1, sowie ein Verfahren nach dem Oberbegriff des Anspruches 7.

In verschiedenen Verfahren wird Feststoff, der in Pulverform oder körnig vorliegt, bestimmten Behandlungen unterworfen. Dazu gehört beispielsweise die thermische Behandlung, bei der Feststoff gegebenenfalls getrocknet, geröstet oder auch sterilisiert wird. Auch das Beschichten von Feststoff-Teilchen mit Farbe oder CVD beispielsweise, deren Befeuchten mit Dampf, das Bestrahlen mit elektromagnetischer Strahlung oder Ultraschall oder auch das gezielte, dosierte Mischen mit einem Fluid oder einem anderen Feststoff sind in den unterschiedlichsten Verfahren mögliche Massnahmen.

Beispielhaft, sowohl für Art der Behandlung als auch für dabei auftretende Probleme, ist die kurzzeitige thermische Behandlung von keramischem Rohpulver, das Temperaturen von ca 1000 - 2000 °C ausgesetzt wird. Die US-PS-5,108,461 beschreibt ein Verfahren, bei dem keramisches Rohpulver in ein Fallrohr mit verschiedenen Abteilungen, die jeweils unterschiedliche Temperaturbereiche besitzen, eingespeist wird und dieses abteilungsweise durchfällt. Damit soll eine verbesserte Einstellung des Gefüges erreicht werden, d.h. der Menge und Verteilung der Kristallphasen, sowie der inneren Struktur der behandelten Agglomerate. Grössere Abweichungen von einer mittleren Kornverteilung würden aber unterschiedliche Fallzeiten und damit unterschiedlich lange Temperaturbehandlung bewirken, womit es unsicher wird, das gewünschte Gefüge einzustellen. Es wäre somit wünschenswert, eine gleichmässige Behandlung des Feststoffs zu gewährleisten, die im wesentlichen unabhängig von Kornverteilungen ist.

In Abhängigkeit von Art des zu behandelnden Feststoffs, von Reaktionspartner und Behandlungsart wird eine bestimmte räumliche Verteilung der Feststoffteilchen-Menge anzustreben sein, um jedes einzelne Feststoff-Teilchen in gleicher Weise zu erfassen, und somit in definierter Weise gezielt einstellbar in gleicher Weise zu behandeln. Ein Beispiel dafür ist die Behandlung von Flugasche, die vorzugsweise in feuchtem Zustand transportiert bzw. deponiert wird und dazu mit Wasser-Tröpfchen oder Dampf besprüht wird. Damit dies in gleichmässiger Weise für alle Teilchen möglich wird, sollte ein möglichst dünner Feststoff-Schleier vorliegen, der ein- oder auch beidseitig besprüht wird.

Pulvriger oder körniger Feststoff sollte demnach - wie erwähnt - in Abhängigkeit von den beabsichtigten Impuls-, Wärme- oder Stoffaustauschvorgängen in einer räumlichen Verteilung vorliegen, welche dem durchzuführenden Prozess angepasst ist.

So sind Impuls-, Energie- oder Stoffflüsse, welche einem Partikelkollektiv von aussen zugeführt bzw. von ihm abgeführt werden müssen und eine begrenzte Eindringtiefe in das Partikelkollektiv besitzen, beispielsweise Wassertropfen oder thermische Strahlung, vorzugsweise einer möglichst dünn ausgebildeten Partikelschicht aufzuprägen, in welcher die Partikel in der gewünschten Konzentration homogen verteilt sind. Eine derartige Verteilung des Feststoffes unterstützt bei hohen Feststoffkonzentrationen in der Partikelschicht weiterhin, dass alle - auch unterschiedlich grossen - Partikel in etwa die gleiche Behandlungszeit erfahren, da der Strömungseinfluss bzw. der Impulseintrag des umgebenden Mediums sich nur an der Oberfläche der Partikelschicht bemerkbar machen kann.

Impuls-, Energie- oder Stoffaustauschvorgänge, die den innigen Kontakt mit dem umgebenden Medium - zum Beispiel einem Gas - erfordern, sind vorzugsweise an einem Partikelkollektiv durchzuführen, für das der Feststoff in gewünschter Konzentration räumlich möglichst homogen verteilt im gesamten, vom Medium erfüllten, zur Verfügung stehenden Raum vorliegt. So erweist sich - insbesondere bei Gasen als Reaktionspartner - eine "nebelige" räumliche Verteilung der Feststoffteilchen zum Erzielen einer gleichmässigen Behandlung als vorteilhaft.

Je nach Verfahren bzw. Reaktionssubstanz entspricht somit die der Behandlung unterworfene, sogenannte "Angriffs-Oberfläche" einerseits im wesentlichen der äusseren Oberfläche der kollektiven Feststoff-Menge oder aber der inneren Oberfläche des Partikelkollektivs, d.h. der Summe der Einzel-Oberflächen der Partikel des Kollektivs.

Die solcherart dargelegte Aufgabe zu lösen, gelingt erfindungsgemäss dadurch, dass eine Vorrichtung bereitgestellt wird, bei der die kennzeichnenden Merkmale des Anspruchs 1 verwirklicht sind, bzw. ein Verfahren entsprechend den kennzeichnenden Merkmalen des Anspruches 7.

Dadurch, dass Mittel vorgesehen sind, den in Strahlform zugeführten, pulverförmigen bzw. körnigen Feststoff mit Fluid zu beaufschlagen, wobei eine Geschwindigkeitskomponente des Fluids senkrecht zur Strahlrichtung oder dieser entgegengesetzt gerichtet ist, wird es möglich, gezielt die räumliche Verteilung des Feststoffes zu ändern, den Feststoff-Strahl aufzuweiten und dabei eine - wenigstens für Teilbereiche, die durch im wesentlichen senkrecht zur Strahlrichtung des Feststoffs liegende Ebenen definiert sind - im wesentlichen gleichmässige Konzentrationsverteilung des Feststoffes zu gewährleisten. (Es versteht sich, dass unter "Feststoff" im Sinne der Anmeldung nicht nur eine Art von Feststoff, sondern auch auch unterschiedliche Feststoffe, beispielsweise ein Feststoffgemenge, zu verstehen ist.) Es entsteht ein Feststoff-Schleier. Die Zuführung des Feststoffs in die Vorrichtung geschieht dabei über eine Dosiereinrichtung, worunter im Sinne dieser Anmeldung Zuteilvorrichtungen zu verstehen sind, die einen kontinuierlichen Feststoffmassenstrom in Strahlform - der gegebenenfalls auch ein Hohlstrahl sein kann - ergeben, wie beispielsweise Förderschnecken, Wirbelbetten (gegebenenfalls mit nachgeschalteter Düseneinrichtung), oder auch Schwingrinnen.

Für Prozesse zwischen Gas und Feststoff wird gegebenenfalls eine weitere Vergrösserung der räumlichen Verteilung des Feststoffes erwünscht sein. Dies kann einerseits dadurch erreicht werden, dass wenigstens eine weitere Fluidzuführeinrichtung vorgesehen wird, die den Feststoff im wesentlichen zentralsymmetrisch zur Feststoff-Strahlrichtung mit Fluid beaufschlagt, wobei eine Geschwindigkeitskomponente des Fluids parallel zur Feststoff-Strahlrichtung gerichtet ist. Alternativ oder zusätzlich zu dieser Massnahme kann auch durch die geometrische Formgebung des die Vorrichtung umgebenden Gehäuses auf die räumliche Verteilung des Feststoffes Einfluss genommen werden. Ein Gehäuse mit in Feststoff-Strahlrichtung zunehmendem Durchmesser unterstützt die gewünschte räumliche Verteilung des Feststoffs. Ausserdem werden mögliche abrasive Interaktionen zwischen Feststoff und Gehäusewand verringert.

Um in einem ersten Schritt den Feststoff-Strahl aufzuweiten, und so einen Feststoff-Schleier zu erreichen, wird der Feststoff-Strahl mit Fluid beaufschlagt. Dies geschieht insbesondere mittels einer Düse, die wenigstens einen Kanal zur Führung von Fluid aufweist. Diese Düse, die vorzugsweise zylindrisch ausgebildet ist und eine zentralsymmetrische Beaufschlagung des Feststoff-Strahls mit Fluid bewirkt, kann innerhalb des Gehäuses der Vorrichtung ganz unterschiedlich angeordnet sein, sie kann in Richtung des Feststoff-Strahls angeordnet sein, oder dieser Strahlrichtung entgegengesetzt. Aus Symmetriegründen - und auch um Abrasion durch Feststoff-Teilchen gering zu halten - wird eine in bezug auf die Strahlrichtung zentrale Anordnung der Düse zu bevorzugen sein.

Ist die Düse in bzw. entgegen der Feststoff-Strahlrichtung verschiebbar ausgebildet, so kann - bei geeignet gewählter Dimensionierung und Ausbildung der Düse (gegebenenfalls des freien Düsenendes) in Abhängigkeit von der Geometrie der Dosiervorrichtung - die Düse als den Mengendurchsatz des aus der Dosiervorrichtung austretenden Feststoff-Strahls begrenzendes Ventil wirksam werden.

Durch die Geometrie und/oder das Material der Düsen-Öffnung bzw. des freien Düsenendes wird die Richtung und gegebenenfalls auch die Menge bzw. Geschwindigkeit des austretenden Fluids bestimmt. Verstellbare Öffnungsquerschnitte erlauben allenfalls eine Variation dieser Parameter während des Betriebes. Dies ist beipielsweise über Blenden und/oder Membranen, die fluidisch beaufschlagbar sind, möglich, die der Düsen-Öffnung zugeordnet sind. Wird ein poröser Teilbereich vorgesehen, über den das Fluid austritt, so wird eine äusserst gleichmässige Verteilung des Fluids erzielbar.

Zur weiteren Vergleichmässigung der räumlichen Verteilung des Feststoffes, was insbesondere in einem zweiten Schritt geschieht, wird der Feststoff zusätzlich mit Fluid beaufschlagt. Das kann über poröse Bereiche erfolgen, die vorzugsweise zentralsymmetrisch zur Richtung des Feststoff-Strahls, gegebenenfalls ringförmig, angeordnet sein sollten. Diese porösen Bereiche können wiederum Teilbereiche unterschiedlicher Porosität besitzen, wodurch in vereinfachter Weise die Verteilung des Feststoffs mit über diesen Verteilungsbereich im wesentlichen gleichmässiger Feststoffkonzentration eingestellt werden kann. Dies kann in analoger Weise auch dadurch bewirkt werden, dass Bereiche mit Fluidauslässen unterschiedlichen bzw. verstellbaren Querschnitts vorgesehen werden, wobei gegebenenfalls auch durch bauliche Massnahmen, wie Blenden oder Blendensysteme, die Richtung des Fluids - zusätzlich zu Menge bzw. Geschwindigkeit desselben - eingestellt werden kann.

Die Erfindung wird im folgenden anhand von Zeichnungen beispielhaft beschrieben. Es zeigen:
Fig. 1 eine erfindungsgemässe Vorrichtung mit einer zwei Fluid-führende Kanäle aufweisenden Düse, und eine Dosiervorrichtung in Form einer mit einer speziellen Auslassdüse versehenen Wirbelbettapparatur;
Fig. 2 eine Vorrichtung mit einer nur einen Fluid-führenden Kanal aufweisenden Düse, und eine Dosierschnecke als FeststoffZuteileinrichtung;
Fig. 3 eine Anordnung, bei der eine zwei Fluid-führende Kanäle aufweisende Düse in Feststoff-Strahlrichtung angeordnet ist;
Fig. 4 eine entsprechend der Fig. 3 angeordnete Düse mit nur einem Fluid-führenden Kanal, wobei die Fig.4a bis 4c jeweils den Schnitt A-A aus Fig.4 zeigen, mit unterschiedlichen Ausgestaltungen der Öffnungen für das Fluid und Fig. 4d einen der Fig. 4 entsprechenden Schnitt durch eine Düse mit einer ringförmigen Öffnung;
Fig. 5 eine Düse, deren Fluid-Auslassöffnung mittels Blenden in bezug auf Querschnitt und Richtung veränderbar ist;
Fig. 6 eine Düse, bei der der Fluid-Auslassöffnung eine fluidisch beaufschlagbare Membran zugeordnet ist;
Fig. 7 eine Düse, bei der der Fluidauslass über poröse Teilbereiche der Düse erfolgt, wobei Fig. 7a und 7b Ausführungsvarianten darstellen;
Fig. 8 eine gleichzeitig als Ventil für die Zuteilung des Feststoffes dienende Düse, und
Fig. 9 eine Vorrichtung, die zusätzliche Mittel zur weiteren Vergleichmässigung der räumlichen Verteilung der Feststoff-Menge aufweist.

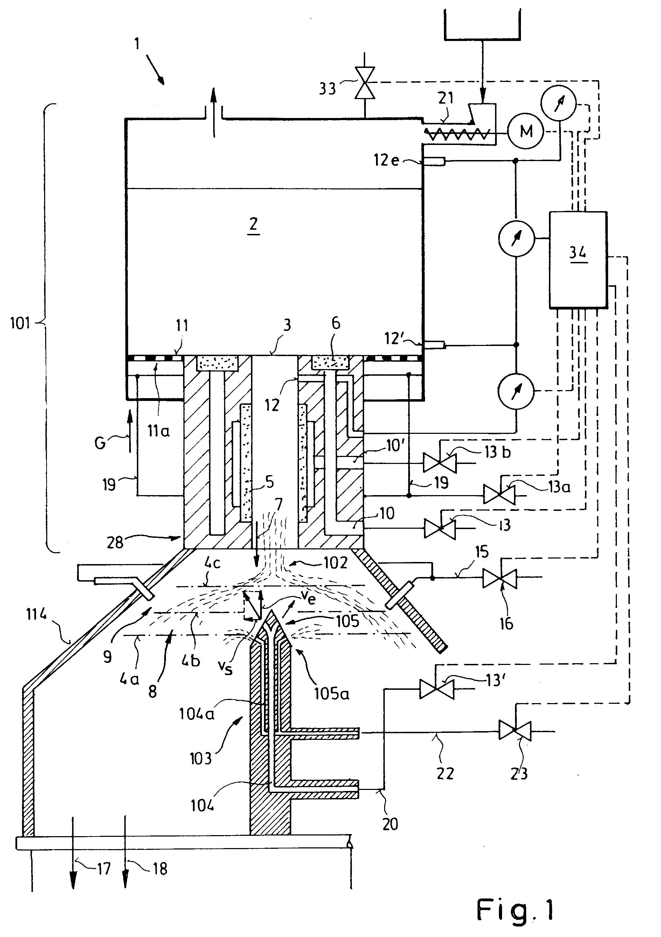

In Fig. 1 ist eine Dosiervorrichtung 101 zu sehen, die eine Wirbelbettapparatur 1 einschliesst, in die über eine Fördereinrichtung 21 pulvriger oder körniger Feststoff eingespeist wird, der durch Fluidisierungsgas G, das durch Öffnungen 11a im Boden 11 strömt, unter Bildung einer Wirbelschicht 2 fluidisiert wird. Über eine Auslassöffnung 3 kann das sich wie eine Flüssigkeit verhaltende Gas/Feststoff-Gemisch ausfliessen, wobei gegebenenfalls eine Düseneinrichtung 28 an die Auslassöffnung 3 anschliessend angeordnet sein kann. Diese Düseneinrichtung 28 umfasst Gaszuführungen 6, 5, die eine zusätzliche Begasung des Gas/Feststoff-Gemischs erlauben und damit dessen Homogenität beeinflussen, aber insbesondere eine zeitkonstante Dosierung des auslaufenden Gas/Feststoff-Stroms erlauben. Signale von Drucksensoren 12, 12' und 12e werden einer beispielsweise speicherprogrammierten Steuerung bzw. Regelung 34 zugeführt, die die Fluidisierung und die zusätzliche Begasung über die Ansteuerung der Ventile 13, 13a und 13b und/oder den Druck oberhalb der Wirbelschicht 2 über ein Ventil 33 und/oder die Zufuhr des Feststoffes in die Wirbelschicht 2 über den Motor M einstellt. Die nähere Funktionsweise einer solchen Wirbelbettapparatur 1 und der Düseneinrichtung 28 (hier nur überblicksmässig beschrieben) sind der EP-A-531 758 und der Schweizer Patentanmeldung 1565/93 der Anmelderin zu entnehmen.

Die hier dargestellte Dosiervorrichtung 101 dient als Beispiel für eine Dosiervorrichtung, mit der eine zeitkonstante Zuteilung von Feststoff möglich wird. Je nach Feststoff, gewünschter Behandlung und gewünschter Dosiergenauigkeit werden andere Dosiervorrichtungen gewählt werden.

Das Gas/Feststoff-Gemenge tritt aus der Düseneinrichtung 28 in Form eines Strahls 102 aus, im folgenden der Einfachheit halber als Feststoff-Strahl bezeichnet, obwohl - je nach Art der Zuteilung bzw. des durchzuführenden Verfahrens Gas oder auch Flüssigkeit beigemischt sein könnte.

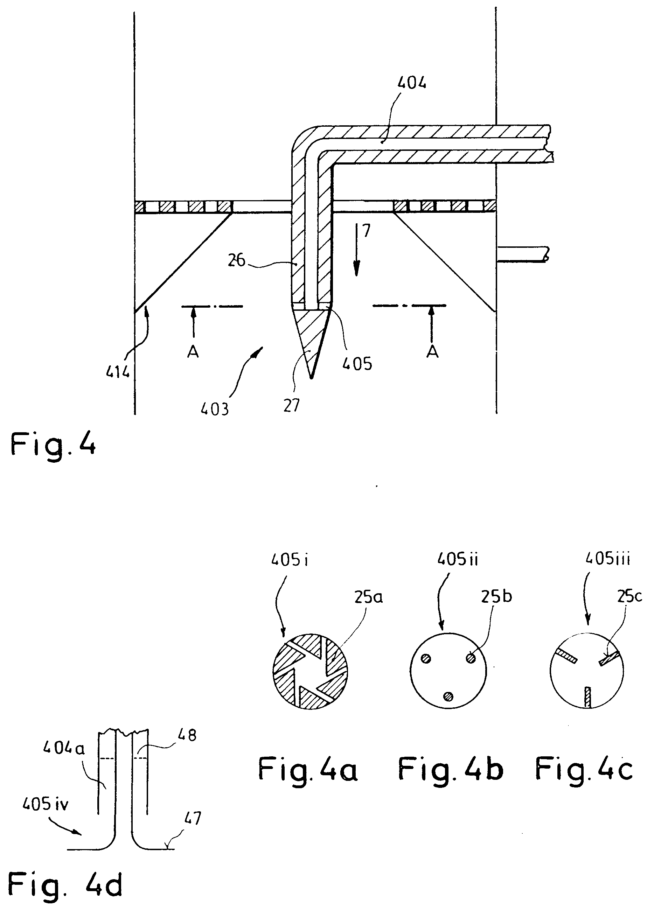

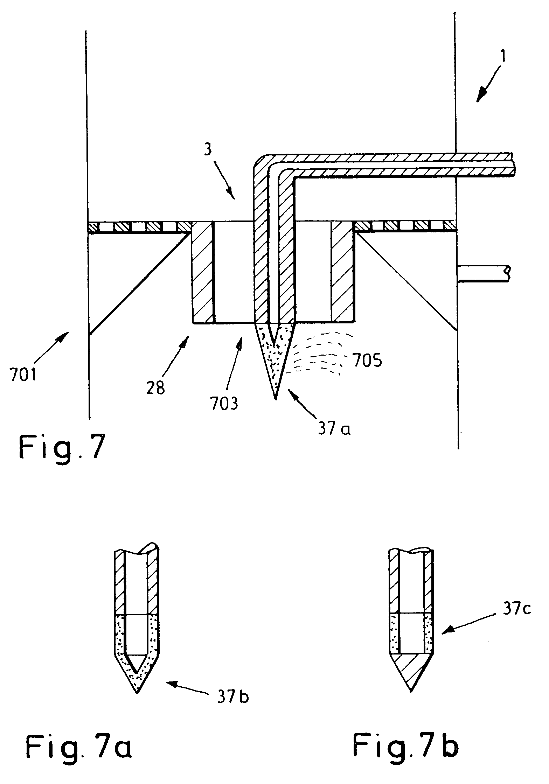

Eine Düse 103 ist unterhalb der als Auslass dienenden Düseneinrichtung 28 der Dosiervorrichtung 101 angeordnet. Die Düse 103 besitzt zwei Kanäle 104 und 104a, über die Fluid ausgebracht werden kann. Wenigstens einer der beiden Kanäle, vorzugsweise derjenige, dessen Öffnung(en) 105 (über Art und Anzahl der Öffnung(en) siehe weiter unten, insbesondere Fig. 4, 4a-4d und Fig. 7, 7a, 7b) näher an der Dosiervorrichtung 101 liegen, führt Fluid, vorzugsweise Gas, mit dem der Feststoff-Strahl 102 - gesteuert über ein Einlassventil 13' - beaufschlagt wird. Damit kommt es zu einer schirmartigen Auffächerung des Feststoff-Strahls 102; in Abhängigkeit von Menge bzw. Geschwindigkeit des Fluids entsteht ein Feststoffschleier 8 bestimmter Dicke.

Wie aus Fig.1 zu entnehmen ist, wird der Feststoff-Strahl 102 derart mit Fluid beaufschlagt, dass eine Geschwindigkeitskomponente vₑ des Fluids der Feststoff-Strahlrichtung 7 entgegengesetzt gerichtet ist und/oder eine Geschwindigkeitskomponente vₛ des Fluids zu dieser Feststoff-Strahlrichtung 7 senkrecht liegt. Damit - und nur so ist eine gleichmässige Behandlung über den Bereich des aufgefächerten Feststoff-Strahls 102 gewährleistet - ist es möglich, eine gleichmässige Konzentrationsverteilung über den schirmförmigen Bereich des so entstandenen Feststoff-Schleiers 8 zu erhalten. Je nach Richtungsdiversifikation und/oder Geschwindigkeit und Menge des austretenden Fluids und gegebenenfalls auch in Abhängigkeit von der Qualität des zudosierten Feststoff-Strahls 102 wird die Konzentrationsverteilung im wesentlichen über den ganzen schirmförmigen, Feststoff-erfüllten Bereich gleichmässig sein, jedenfalls aber wenigstens für Teilbereiche, die durch Ebenen 4a, 4b, 4c begrenzbar sind, die senkrecht zur Feststoff-Strahlrichtung 7 liegen.

Das freie Düsenende ist konisch zulaufend ausgebildet, mögliche Interaktionen zwischen Feststoff-Teilchen und Düsenspitze, und somit deren Abrasion, werden vermindert.

Über die Öffnung(en) 105a des zweiten Kanals 104a kann ebenfalls Fluid, und dann insbesondere Gas, ausgetragen werden, womit der Feststoff verstärkt aufgefächert wird. Andererseits kann über einen solchen Kanal 104a auch Behandlungsmedium auf die untere Oberfläche des Feststoff-Schleiers 8 aufgebracht, insbesondere gesprüht, werden. Zusätzlich zur unteren Oberfläche kann auch die obere Oberfläche des Feststoff-Schleiers mit Behandlungsmedium besprüht werden. Dazu sind Düsen 9 am Gehäuse 114 vorgesehen, über die der Feststoff-Schleier 8 in möglichst gleichmässiger Weise beaufschlagt wird. Vorzugsweise mehrere Düsen 9 sind rund um die Strahlrichtung 7 angeordnet, auch eine ringförmig ausgebildete Düse ist denkbar. Das Behandlungsmedium wird über eine mit einem Einlassventil 16 versehene Zuleitung 15 an die Düsen 9 geführt.

Der solcherart behandelte Feststoff wird über eine - rein schematisch angedeutete - Abzugsleitung 17 abgezogen, Behandlungsmedium und/oder Fluidisierungsfluid und das die Veränderung der räumlichen Verteilung bewirkende Fluid über eine - ebenfalls nur schematisch angedeutete - Abzugsleitung 18. Es versteht sich, dass gegebenenfalls nur eine einzige Abzugsleitung vorgesehen sein mag.

Ventile 13' bzw. 23 in den Zuleitungen 20 bzw. 22 zu den Fluidführenden Kanälen 104 bzw.104a können gegebenfalls auch über die Steuerung 34 einem gewünschten Behandlungsablauf entsprechend gesteuert werden.

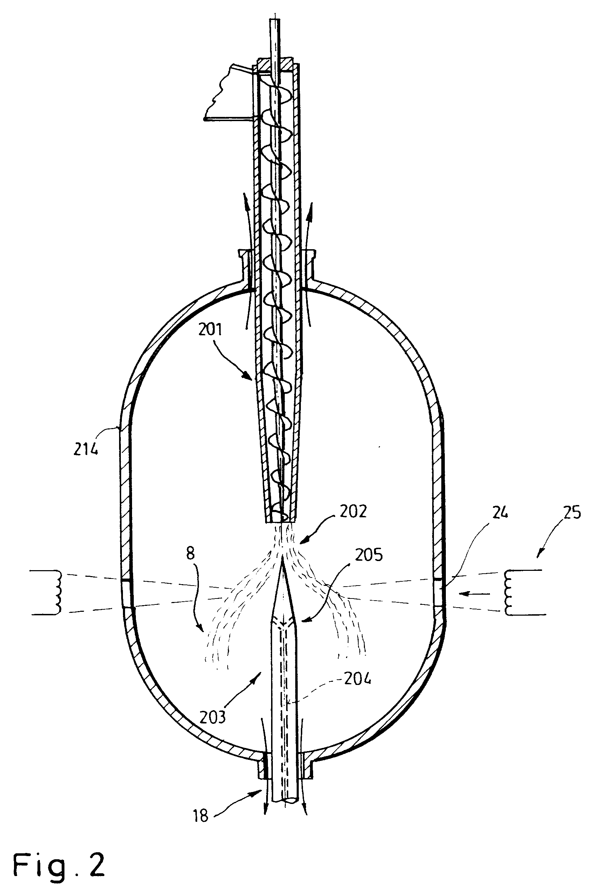

In Fig.2 ist eine Dosiervorrichtung 201 in Form einer Förderschnecke gezeigt, über die Feststoff in Form eines Strahls 202 in ein Gehäuse 214 eingespeist wird. Der Feststoff-Strahl 202 wird mit Fluid, insbesondere Gas, aus der Düse 203, die hier nur einen Fluid-führenden Kanal 204 aufweist, beaufschlagt, so dass eine schirmartige Aufweitung des Feststoff-Strahls 202 bewirkt wird.

Das Gehäuse 214 weist einen insbesondere ringförmigen Bereich 24 auf, über den thermische Strahlung (Heizwendeln 25 sind angedeutet) ins Innere des Gehäuses 214 und auf den Feststoff-Schleier 8 gelangt.

Eine Dosiervorrichtung wie die in Fig.2 dargestellte Förderschnecke kann dann als Feststoff-Zuteilvorrichtung dienen, wenn zeitkonstantes Dosieren des Feststoffs nicht wesentlich ist. Zeitkonstantes Dosieren, das beispielsweise mittels einer anhand der Fig.1 beschriebenen Dosiervorrichtung möglich ist, ist für solche Prozesse erwünscht, die in kurzen Zeiten ablaufen und bei denen keine Rückvermischung stattfinden sollte.

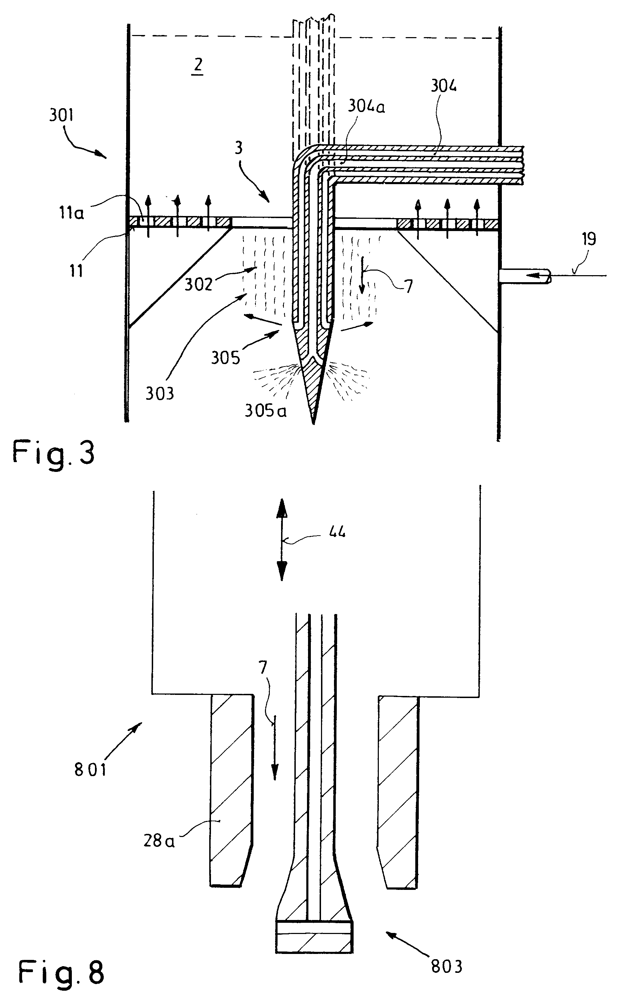

Fig.3 zeigt eine Düse 303, die entsprechend der in Fig.1 gezeigten Düse 103 zwei Fluid-führende Kanäle 304 und 304a aufweist, im Gegensatze zu dieser aber in Strahlrichtung 7 des aus der Dosiervorrichtung 301 austretenden Feststoff-Strahls 302 gerichtet ist. Die Dosiervorrichtung 301 ist hier eine Wirbelbettapparatur. Fluidisierungsgas wird über eine pneumatische Leitung 19 (in etwa entsprechend Fig.1) zugeführt und strömt durch Öffnungen 11a im Boden 11, wobei der in die Wirbelbettapparatur eingespeiste Feststoff fluidisiert wird, und als Feststoff-Fluid-Mischung in der Wirbelschicht 2 vorliegt. Durch die Auslassöffnung 3 im Wirbelbettboden 11 fliesst die Fest-Stoff-Gas-Mischung aus, und liegt, da die Düse 303 im Zentrum der Auslassöffnung 3 angeordnet ist, als Hohlstrahl 302 - ebenfalls als Feststoff-Strahl bezeichnet - vor.

Über Öffnungen 305, die näher an der Auslassöffnung 3 liegen, wird Fluid ausgetragen, das der Aufweitung des Feststoffstrahls 302 dient. Über in Strahlrichtung 7 nachfolgende Öffnungen 105a kann dann Fluid ausgetragen werden, das - wie anhand der Fig.1 diskutiert - entweder zur weiteren Aufweitung des Feststoffstrahles 302 dient, somit einen breiten, dünnen Feststoffschleier 8 ergebend, oder aber auch zum Austragen von Behandlungsmedium dient, das auf die untere Oberfläche des schirmförmigen Feststoff-Schleiers 8 aufgetragen, wie aufgesprüht oder aufgespritzt, werden kann.

Wie anhand der Fig.1 bzw.2 beschrieben, kann ein weiteres oder auch nur das einzige Behandlungsmedium über Düseneinrichtungen bzw. - für den Fall von Strahlungsbehandlung - über einen spezifisch ausgebildeten Gehäusebereich bzw. durch das Vorsehen entsprechender Einrichtungen, die gegebenenfalls auch innerhalb des Gehäuses angeordnet sein können, aufgebracht werden.

Wird die Düse 302 in Strahlrichtung 7 angeordnet, wie beispielhaft in Fig.3 gezeigt, wobei - um Erosion durch die in der Wirbelschicht 2 sich bewegenden Feststoffteilchen zu verringern - eine geradlinige, zentrale Zuführung der Düse 303 gegebenenfalls vorzuziehen ist (strichliert angedeutet), wird die Aufweitung des Feststoff-Strahls und die Bildung eines schirmförmigen Feststoff-Schleiers 8 durch die Halterung der Düse kaum beeinflusst.

Fig.4 zeigt eine Düse 403, die ebenfalls in Feststoff-Strahlrichtung 7 angeordnet ist und nur einen Fluid-führenden Kanal 404 aufweist. Am freien Ende der Düse 403 sind Öffnungen 405 vorgesehen, durch die das Fluid ausströmt und damit - wie oben beschrieben - eine Aufweitung des Feststoff-Strahls bewirkt. Diese Öffnungen 405 können unterschiedlich aussehen, wie aus den Fig.4a bis 4c zu entnehmen ist, die jeweils einen Schnitt längs A-A der Fig.4 zeigen.

Die in den Fig.4a bis 4c dargestellten Öffnungen werden durch Abstandshalter 25 zwischen der Düsenhalterung 26 und der Düsenspitze 27 definiert.

Fig.4a zeigt Öffnungen 405i, die in Form von tangentialen Kanälen zwischen den Abstandshaltern 25a ausgebildet sind. Das daraus austretende Fluid wird - ausser für geringe Austrittsgeschwindigkeiten - im wesentlichen strahlenförmig den durch das sich konisch erweiternde Gehäuse 414 bereits etwas aufgeweiteten Feststoff-Strahl beaufschlagen und gegebenenfalls eine Drehung des enstehenden Feststoffschirms bewirken. Die Geschwindigkeit bzw. Menge des aus den Öffnungen 405i austretenden Fluids muss derart kontrolliert werden, dass keine "Durchlöcherung" des Feststoff-Schirms durch die Fluidstrahlen resultiert.

Die in Fig.4b gezeigte Anordnung mit stäbchenförmigen Abstandhaltern 25b ergibt eine gleichmässige Fluid-Zufuhr über den gesamten Umfang der Düse und der ringförmigen Düsenöffnung 405ii. Es können auch mehrere derartige Abstandhalter 25b vorgesehen sein, symmetrisch verteilt, wodurch die Stabilität der Verbindung zwischen Düsenspitze 27 und Düsenhalterung 26 (Fig.4) verbessert wird.

Fig.4c zeigt eine Ausbildungsvariante, bei der radial ausgerichtete Abstandshalter 25c vorgesehen sind. Fluid, das aus den dazwischen liegenden Öffnungen 405iii strömt, wird allerdings nicht ebenso gleichmässig über den Umfang der Düse ausströmen, wie beispielsweise bei der in Fig.4b gezeigten Ausbildung.

Das freie Ende der Düse 403 kann bei dieser Anordnung der Düse in Strahlrichtung 7 auch als Prallplatte 47 ausgebildet sein, wie aus Fig.4d zu ersehen ist. Hier ist der Fluid-führende Kanal 404a als Ringkanal ausgebildet, dessen Innenwandung als Trägerstruktur für die Prallplatte 47 dient. Gitterförmige oder stäbchenartige Abstandhalter 48 zwischen Aussen- und Innenwand des Kanals 404a ermöglichen einen ungehinderten Fluid-Durchfluss. Das Fluid tritt aus der ringförmigen Öffnung 405iv nach allen Seiten gleichmässig aus. Ein gerundeter Übergang zwischen Innenwand des Kanals 404a und Prallplatte 47 verbessert die Führung des Fluids.

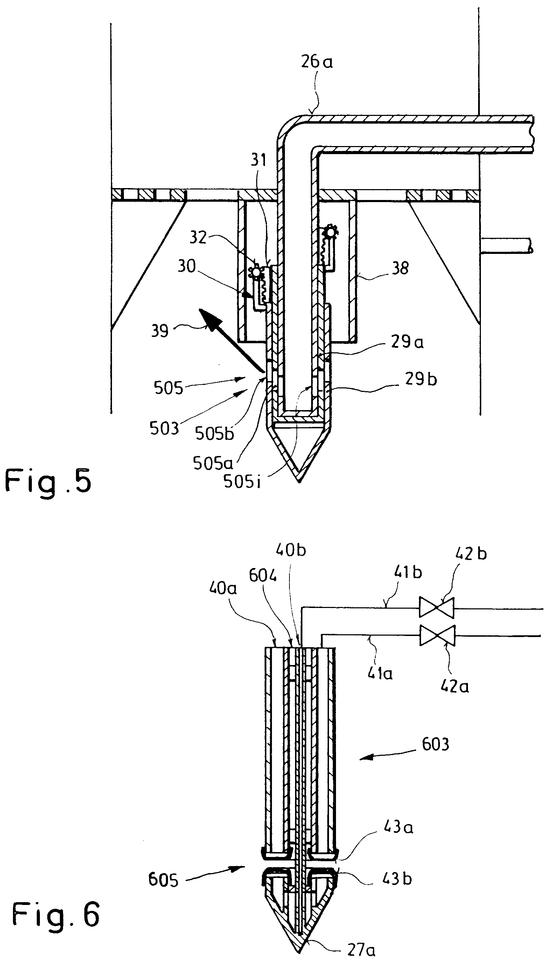

Fig.5 und auch Fig.6 zeigen Düsen 503 bzw. 603, bei denen die Öffnungen 505 bzw. 605 hinsichtlich deren Querschnitt und/oder Richtung verstellbar sind.

Fig.5 zeigt eine zentrale Düsenhalterung 26a, die Öffnungen 505i aufweist und über der zwei rohrförmige Blendenteile 29a und 29b verschiebbar angeordnet sind. Diese Blendenteile 29a und 29b weisen ebenfalls Öffnungen 505a und 505b auf, die den Öffnungen der Düsenhalterung 26a entsprechend ausgebildet sind, so dass sie bei entsprechender Stellung der beiden Blendenteile 29a und 29b miteinander fluchten. Über in einer Halterung 38 vorgesehene Verstellvorrichtungen 30, die hier als Zahnstange 31 mit zusammenarbeitendem Zahnrad 32 dargestellt sind, können die Blendenteile 29a und 29b voneinander unabhängig verschoben werden, so dass die Richtung der sich ergebenden Öffnung 505 der Düse 503 und damit auch die Richtung des daraus ausströmenden Gases einstellbar ist und beispielsweise bei der in Fig.5 gezeigten Blendenstellung durch den Pfeil 39 gegeben ist. Auch eine Reduktion des Öffnungsquerschnittes der Öffnung 505 der Düse 503 ist durch Verstellung der Blendenteile 29a und 29b möglich.

In Fig.6 ist eine andere Möglichkeit gezeigt, wie der Öffnungsquerschnitt der Öffnung 605 an einer Düse 603 verstellt werden kann, ohne dass dazu - wie beispielsweise in Fig.5 die die Verstellvorrichtungen für das Blendensystem abdekkende Halterung - zusätzliche Bauteile, die im allgemeinen für den Prozess störend sein werden, bzw. zusätzliche Verschleissteile darstellen, nötig sind. Die Düse 603 weist drei Fluid-führende Kanäle 604, und 40a und 40b auf. Der ringförmige Kanal 604 führt das Fluid, das aus der ringförmigen Öffnung 605 austritt und den Feststoff-Strahl aufweitet. Um diesen ringförmigen Kanal 604 ist ein weiterer ringförmiger Kanal 40a angeordnet, dessen Stirnseiten von einer Ring-Membran 43a abgeschlossen sind. Ein zentraler Kanal 40b führt zu der Düsenspitze 27a und bildet einen wulstartigen, ebenfalls von einer Ring-Membran 43b abgeschlossenen Gegenring, so dass durch die beiden Ring-Membrane 43a und 43b die Öffnung 605 für das über den Kanal 604 zugeleitete Fluid begrenzt wird. Wird nun über pneumatische (gegebenenfalls auch hydraulische) Leitungen 41a und 41b, über Ventile 42a bzw. 42b gesteuert, Fluid zugeführt bzw. abgelassen, so werden sich die beiden Ring-Membrane 43a und 43b ausdehnen bzw. zusammenziehen, wodurch sich der Öffnungsquerschnitt der Öffnung 605 verkleinert bzw. vergrössert. Auch mit nur einer einseitig von einer Membran begrenzten Öffnung und somit nur einem zusätzlichen Fluid-führenden Kanal wird eine solche Arbeitsweise möglich.

Fig.7 zeigt sehr schematisch eine Fig.1 entsprechende Dosiervorrichtung 701, d.h. eine Wirbelbettapparatur 1 mit einer an die Auslassöffnung 3 anschliessenden Düseneinrichtung 28 zur zeitkonstanten Dosierung eines ausfliessenden Feststoff-Strahles. Die Düse 703 ist hier wieder in Strahlrichtung angeordnet, und zwar zentral in der Düseneinrichtung 28. Die Düse 703 weist einen porösen Bereich 37a auf, wodurch eine sehr grosse Anzahl von gleichmässig verteilten, feinen Öffnungen 705 gegeben ist. Damit wird eine besonders gleichmässige, aber nur bedingt auch eine gerichtete Beaufschlagung des Feststoff-Strahls mit Fluid möglich.

Es wird sich im allgemeinen zur Minimierung der nötigen Bauhöhen als vorteilhaft erweisen, die Düse recht kurz zu halten, so dass das Beaufschlagen mit Fluid nahe der Dosiervorrichtung geschieht. Ist allerdings die Düse so ausgebildet, dass über sie auch Behandlungsmedium ausgebracht wird, so sollte auf genügenden Abstand von der Dosiervorrichtung geachtet werden, um gegebenenfalls Verkleben oder Verschmutzen derselben zu unterbinden.

Fig.7a und 7b zeigen Düsen mit porösem Bereich 37b bzw. 37c, deren jeweils andere Anordnung das durchtretende Fluid etwas anders gerichtet sein lässt.

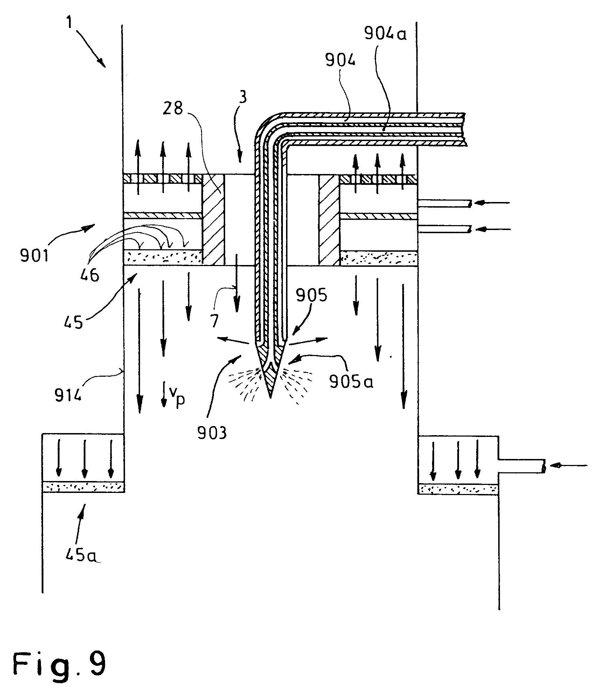

In Fig.8 ist eine Dosiervorrichtung 801 angedeutet, die gegebenfalls entsprechend der in Fig.1 und Fig.7 beschriebenen ausgebildet sein kann, oder aber auch nur eine Zuteilvorrichtung mit speziell geformtem Austragsstutzen 28a darstellt (der gegebenenfalls der Düseneinrichtung 28 der Fig.1 bzw. 7 entspricht). Durch diesen Austragsstutzen 28a ragt eine Düse 803, deren freies Ende stempelartig erweitert ausgebildet ist. Wird diese Düse 803 in oder entgegen der Feststoff-Strahlrichtung 7 bewegt, entsprechend dem Pfeil 44, so wird damit der Durchsatz von Feststoff aus der Dosiervorrichtung variabel, ja, bei geeigneter Dimensionierung auch unterbrochen. Die Düse 803 dient hier somit auch als Durchsatzventil.

Eine solcherart ausgebildete Düse 803 wird allein durch ihre Formgebung eine rein mechanische Strahlaufweitung bewirken. Gegebenfalls kann eine solche Düsenform alleine eine genügend gute Aufweitung des Feststoff-Strahl bewirken (in äquivalenter Weise gilt das auch für Düsen, die gegen die Strahlrichtung 7 angeordnet sind), ohne dass der Feststoff-Strahl mit Fluid beaufschlagt wird. Eine solche, rein mechanische Aufweitung des Feststoff-Strahls kann für wenig schleissende Feststoffe ausreichend und - gegebenenfalls auch aus Kostengründen - von Vorteil sein.

Wie bereits einleitend erwähnt, wird insbesondere für Prozesse, die zwischen Gas und Feststoff ablaufen sollen, eine vergrösserte, sogenannte innere Oberfläche - bei gleichzeitig gleichmässiger Konzentrationsverteilung des Feststoffes über den eingenommenen Raum - erwünscht. Die Aufweitung des Feststoff-Strahles zu einem schirmartigen Schleier wäre dann ungenügend.

In Fig.9 ist eine Vorrichtung gezeigt, die eine weitere raumliche Aufweitung und Ausbreitung des aus einer Dosiervorrichtung eingespeisten Feststoff-Strahls ermöglicht. Die Dosiervorrichtung 901 entspricht der in Fig.1 und 7 beschriebenen Dosiervorrichtung, sie umfasst somit eine Wirbelbettapparatur 1 mit einer an die Auslassöffnung 3 anschliessenden Düseneinrichtung 28 zur zeitkonstanten Dosierung eines ausfliessenden Feststoff-Strahles. Die Düse 903 ist hier wieder in Strahlrichtung angeordnet, und zwar zentral in der Düseneinrichtung 28. Die Ausgestaltung der Düse 903 entspricht im wesentlichen der der Fig.1 bzw. der Fig.3. Zwei Fluid-führende Kanäle 904 und 904a sind vorgesehen, wobei über die Öffnungen 905 des ersten Kanals 904 Fluid ausgetragen wird, das in oben dargestellter Weise zur Auffächerung des Feststoff-Strahls dient. Über die Öffnung(en) 905a des zweiten Kanals 904a kann entweder Fluid ausgetragen werden zur verstärkten Auffächerung des Feststoff-Strahls, oder auch Behandlungsmedium ausgesprüht werden.

Zusätzlich zu dem ersten Schritt der Aufweitung des Feststoff-Strahls wird dieser mit Fluid beaufschlagt, das über die ganze Breite des schirmförmigen Feststoffschleiers mit im wesentlichen zur Feststoff-Strahlrichtung 7 paralleler Geschwindigkeitskomponente vₚ ausgetragen wird. Dazu ist eine Fluidzuführeinrichtung 45 oberhalb der Fluid-Auslass-Öffnungen 905 der Düse 903 angeordnet, wobei sie letztere in etwa konzentrisch umgibt. Die Auslassöffnungen für das Fluid sind in Form von porösen Teilbereichen 46 ausgebildet, mit gegen die Gehäusewand zunehmender Porengrösse. Damit wird die Einstellung eines bestimmten Geschwindigkeitsprofils möglich, wodurch einerseits eine gleichmässige räumliche Verteilung des Feststoffs bewirkt wird und andererseits auch Materialanlagerungen ("Festbacken") an der Wand des Gehäuses 914 verhindert werden.

Auch Leitbleche könnten vorgesehen sein, die anstelle der Teilbereiche 46 unterschiedlicher Porosität als Strömungsrichter für ein aus der Fluidzuführvorrichtung 46 ausströmendes Fluid dienen.

Eine bzw. gegebenenfalls weitere Fluidzuführvorrichtungen 45a können im sich in Feststoff-Strahlrichtung 7 erweiternden Gehäuse 914 vorgehen werden, wodurch ein zweifacher Effekt erreicht wird. Einerseits wird durch die mehrstufige Fluidzugabe eine gleichmässige Verteilung des Feststoffs über einen grossen räumlichen Bereich möglich, der Feststoff liegt dann in Form einer schwach-konzentrierten Wolke vor, andererseits unterstützt die Formgebung des Gehäuses 914 - einem Diffusor entsprechend - diese räumliche Verteilung.

## Patentansprüche

1. Vorrichtung zum Verändern der räumlichen Verteilung einer Menge von pulverförmigem oder körnigem Feststoff zur Vergrösserung der einem der räumlich verteilten Feststoffmenge zuführbaren Behandlungsmedium dargebotenen Angriffs-Oberfläche der Feststoffmenge, welche über eine Dosiervorrichtung (101, 201, ...,901) in Strahlform (102, 202,...) zugeführt wird, **dadurch gekennzeichnet**, dass Mittel vorgesehen sind, den Feststoff derart mit wenigstens einem Fluid zu beaufschlagen, dass eine Geschwindigkeitskomponente (vₛ, vₑ) des Fluids senkrecht zur Strahlrichtung (7) des Feststoffs oder dieser entgegengerichtet ist, wobei die Konzentrationsverteilung des Feststoffs über einen der vergrosserten Angriffsoberfläche entsprechenden Bereich - wenigstens jeweils für Teilbereiche, die durch im wesentlichen senkrecht zur Strahlrichtung (7) liegende Ebenen (4a,4b,4c) definiert sind - im wesentlichen gleichmässig ist.

2. Vorrichtung nach Anspruch 1, dadurch gekennzeichnet, dass die Mittel eine wenigstens einen Fluid-führenden Kanal (104, 204,..., 904; 104a, 304a, 904a; 40a, 40b) aufweisende, im wesentlichen zylindrische Düse (103, 203, ..., 903) umfassen mit wenigstens einer dem freien Ende zugeordneten Öffnung (105, 205,..., 905; 105a, 305a, 905a), die einen zur Feststoff-Strahlrichtung (7) im wesentlichen zentralsymmetrischen Fluidauslass bewirkt, welche Öffnung (105, 205,..., 905; 105a, 305a, 905a) insbesondere radial zu der Feststoff-Strahlrichtung (7) oder entgegen die Feststoff-Strahlrichtung (7) geneigt gerichtet ist und vorzugsweise ringförmig ausgebildet ist;
und dass vorzugsweise wenigstens eines der folgenden Merkmale vorgesehen ist:
a) die Öffnung (705) ist als poröser Teilbereich (37a; 37b; 37c) der Düse (703) ausgebildet;
b) die Öffnung (505; 605) ist in bezug auf den Öffnungsquerschnitt und/oder auf die Fluidauslass-Richtung verstellbar ausgebildet, wobei bevorzugt der Öffnung (505; 605) wenigstens eine - insbesondere zylindrische - Blende (29a, 29b) und/oder eine fluidisch beaufschlagbare Membran (43a, 43b) zugeordnet ist;
c) die Düse (102, 203) ist entgegen der Feststoff-Strahlrichtung (7) gerichtet angeordnet, wobei ihr freies Ende insbesondere als konisch zulaufende Spitze ausgebildet ist;
d) die Düse (803) ist - insbesondere in bzw. entgegen die Feststoff-Strahlrichtung (7) - verschiebbar, wobei das freie Ende der Düse vorzugsweise als mit der Dosiervorrichtung (801) zusammenwirkendes Ventil ausgebildet ist.

3. Vorrichtung nach einem der vorhergehenden Ansprüche, dadurch gekennzeichnet, dass zusätzliche Mittel (45, 45a, 914) zur weiteren Vergleichmässigung der räumlichen Verteilung der Feststoffmenge vorgesehen sind, wobei die Konzentrationsverteilung des Feststoffs über den vom Feststoff ausgefüllten Raumbereich im wesentlichen gleichmässig ist.

4. Vorrichtung nach Anspruch 3, dadurch gekennzeichnet, dass die zusätzlichen Mittel wenigstens eine Fluidzuführeinrichtung (45, 45a) umfassen, die eine im wesentlichen zentralsymmetrische Beaufschlagung des Feststoffs mit Fluid bewirkt, wobei eine Geschwindigkeitskomponente (vₚ) des Fluids parallel zur Feststoff-Strahlrichtung (7) gerichtet ist.

5. Vorrichtung nach Anspruch 4, dadurch gekennzeichnet, dass die Fluidzuführeinrichtung (45, 45a) ringförmig - gegebenenfalls in Feststoff-Strahlrichtung (7) versetzt - um den Auslass der Dosiervorrichtung (901) angeordnet ist und insbesondere ringförmige - gegebenenfalls poröse - Bereiche (46) mit Fluidauslässen unterschiedlichen bzw. verstellbaren Querschnitts aufweist.

6. Vorrichtung nach einem der Ansprüche 3 bis 5, dadurch gekennzeichnet, dass ein die Vorrichtung umgebendes Gehäuse (914) einen in Feststoff-Strahlrichtung (7) zunehmenden Durchmesser aufweist.

7. Verfahren zum Verändern der räumlichen Verteilung einer Menge von pulverförmigem oder körnigem Feststoff zur Vergrösserung der einem der räumlich verteilten Feststoffmenge zuführbaren Behandlungsmedium dargebotenen Angriffs-Oberfläche der Feststoffmenge, die über eine Dosiervorrichtung (101, 201, 301,...901) in Strahlform (102, 202,...) zugeführt wird, **dadurch gekennzeichnet**, dass der Feststoffstrahl (102, 202,...) mit wenigstens einem Fluid derart beaufschlagt wird, dass eine Geschwindigkeitskomponente (vₛ, vₑ) des Fluids senkrecht zur Strahlrichtung (7) oder dieser entgegengesetzt gerichtet ist und die Beaufschlagung mit dem Fluid im wesentlichen zentralsymmetrisch zur Feststoff-Strahlrichtung (7) erfolgt.

8. Verfahren nach Anspruch 7, dadurch gekennzeichnet, dass der Feststoff zusätzlich - im wesentlichen zentralsymmetrisch zur Feststoff-Strahlrichtung (7) und mit einer zur Feststoff-Strahlrichtung parallelen Geschwindigkeitskomponente (vₚ) - mit Fluid beaufschlagt wird.
